(19)

Europäisches
Patentamt

European
Patent Office

Office européen
des brevets

(11)     **EP 4 357 308 A1**

(12)                          **EUROPEAN PATENT APPLICATION**
                              published in accordance with Art. 153(4) EPC

(43) Date of publication:
    **24.04.2024   Bulletin 2024/17**

(51) International Patent Classification (IPC):
    *C03C 3/087* (2006.01)          *C03C 4/02* (2006.01)
    *C03C 4/08* (2006.01)

(21) Application number: **21946187.8**

(22) Date of filing: **18.06.2021**

(52) Cooperative Patent Classification (CPC):
    **C03C 3/087; C03C 4/02; C03C 4/08**

(86) International application number:
    **PCT/MX2021/050029**

(87) International publication number:
    **WO 2022/265484 (22.12.2022 Gazette 2022/51)**

(84) Designated Contracting States:
    **AL AT BE BG CH CY CZ DE DK EE ES FI FR GB**
    **GR HR HU IE IS IT LI LT LU LV MC MK MT NL NO**
    **PL PT RO RS SE SI SK SM TR**
    Designated Extension States:
    **BA ME**
    Designated Validation States:
    **KH MA MD TN**

(71) Applicant: **Vidrio Plano De México, S.A. De C.V.**
    **CP 66000 García, Nuevo León (MX)**

(72) Inventor: **CID AGUILAR, José Guadalupe**
    **Nuevo León, 64349 (MX)**

(74) Representative: **f & e patent**
    **Braunsberger Feld 29**
    **51429 Bergisch Gladbach (DE)**

(54)     **GREY GLASS HAVING LOW LIGHT TRANSMISSION**

(57)     The present invention describes a low light transmission gray glass formed from a composition of soda-silica-calcium glass and a dye, wherein the dye comprises: $Fe_2O_3$ from 1.65 to 3.0%; from 15 to 40% ferrous (% reduction); 0.28 to 1.2% FeO (expressed as $Fe_2O_3$); $Co_3O_4$ from 0.030 to 0.040%; Selenium from 0.0020 to 0.010%; CuO from 0.00050 to 0.050%; and, $TiO_2$ from 0.01 to 1%, wherein the glass has a light transmission of illuminant A ($T_{LA}$) no greater than 15%, a direct solar energy transmission ($T_{DS}$) no greater than 14%, a near infrared radiation transmission ($T_{IR}$) no greater than 14%, an ultraviolet radiation transmission (Tuv) no greater than 8%, and a total solar energy transmission ($T_{TS}$) no greater than 38%, a purity no greater than 50% and a dominant wavelength of 480-590 nm when it has a thickness of 3.85 mm.

Processed by Luminess, 75001 PARIS (FR)

EP 4 357 308 A1

**Description**

**BACKGROUND OF THE INVENTION**

**FIELD OF THE INVENTION**

The present invention relates to a glass with low transmittance, of a neutral gray color and more specifically to a gray glass composition to produce glass for use in the automotive industry, for the manufacture of both laminated and temperate panoramic roofs, rear windows and rear doors.

**BACKGROUND OF THE INVENTION**

Colored glass is a material to which, during the fusion process, metal oxides are incorporated. As a result of previous research, it is known that the addition of iron-cobalt oxides in combination with selenium gives the glass shades from greenish gray - neutral gray to yellowish gray depending on the ratio thereof. By increasing the concentrations of iron oxide, cobalt oxide and selenium and controlling the redox conditions in the glass melting atmosphere and/or in the mixture (mainly carbon and sodium nitrate concentration), a glass with low light transmission, good direct solar transmission blocking and privacy gray coloration, which is widely used in roofs, rear windows and rear doors of motor vehicles can be obtained.

Solar control is the ability to modify the amount of solar radiation transmitted or reflected, in the spectral ranges of near ultraviolet (UV; 300 - 380 nm), visible (VIS; 380 - 780 nm) and infrared (IR; 780 - 2500 nm). In its automotive use, this is achieved with the addition of various absorbent coloring agents in the initial mixture, so that the glass has properties to absorb both infrared (IR) and ultraviolet (UV) solar radiation, to reduce the passage of excess heat towards the interior of the vehicle caused by radiation from the sun, as well as to protect the interiors from the degradation of UV radiation coming therefrom.

The glasses described in almost all patents that refer to a type of neutral gray glass are based on three main dyes: iron oxide, cobalt oxide and selenium, whose main function is to provide solar control properties to the glass.

The following prior art patents use various metal oxides as main dyes to obtain a gray glass and provide the final characteristics of the product. These components, such as nickel oxide, manganese oxide, chromium oxide or rare earth oxides, are mixed in a base formulation of a silica-sodium-calcium glass.

For example, U.S. Patent. No. 5,352,640 (US RE37,998 E) to Combes et al. mentions the obtaining of gray glasses used mainly in the automotive industry, whose composition of coloring agents ranges from 1.4 to 4% of iron oxide ($Fe_2O_3$) and from 0 to 0.05% of cobalt oxide, with around 0.02% of excess cobalt oxide when $Fe_2O_3$ is less than 2%, optionally having a combination of $CoO+Se+Cr_2O_3$ with a content of less than 0.24% by weight. The physical properties of the glass such as light transmission and energy transmission are equal to or less than 20% under illuminant A and equal to or less than 12% at a thickness of 3.85 mm, respectively.

US Patent No. 5,545,596 to Alvarez Casariego, *et al,* discloses the use of dyes is mentioned in concentrations of 0.45 to 2.5% for $Fe_2O_3$ (total iron), from 0.001 to 0.02% for CoO, from 0 to 0.0025% for Se and from 0 to 0.1% for $Cr_2O_3$, for gray glass having a light transmission with illuminant A of 20 to 60%, used in side and rear windows for vehicles.

US Patent No. 7,393,802 B2 to Seto, et al, describes the use of $Fe_2O_3$, CoO, Se and NiO as dyes, but also adds the use of $CeO_2$ and $TiO_2$ in amounts no greater than 2.0% by weight to increase ultraviolet absorption.

For the glasses obtained in US Patent No. 7,622,410 assigned to Longobardo et al, nickel oxide is used in concentrations of 500 to 1000 ppm, erbium oxide from 0.1 to 0.8% and chromium oxide in contents of 1 to 20 ppm, in addition to a total content of iron oxide of 0.15 to 0.45%, selenium less than or equal to 3 ppm and cobalt oxide of 120 to 240 ppm. The mixture of these oxides is used for the general adjustment of the gray coloration of the glass. The light transmission of the glass of this patent is 8 to 25%, with a dominant wavelength of 435 to 570 nm, using a cobalt oxide/nickel oxide ratio of 0.22 to 0.30 and $FeO/Fe_2O_3$ redox values of from 0.20 to 0.40.

The main disadvantage of these glasses is the high cost of using rare earth oxides in their composition.

In US Patent No. 8,017,538 B2 to Teyssedre, et al, the glasses disclosed are known to use nickel oxide in concentrations of 400 to 700 ppm or 1500 to 1900 ppm, iron oxide 0.7 to 0.95% with a redox value of 0.40 or less, plus cobalt oxide at 200 to 300 ppm, to obtain a gray color adjustment and obtain the following physical properties: light transmission under illuminant A ($T_{LA}$) of 50% or less and an average energy transmission ($T_E$) less than 45%, for a glass thickness of 3.85mm.

The use of nickel oxide, used as a dye in some of the previous patents, has the disadvantage that nickel sulfide inclusions can form (a defect that is not easily detectable) that can cause the glass sheets to break due to the difference in the thermal expansion coefficient of this material with the rest of the glass matrix.

The glasses described in US Patent No. 8,551,899 to Kim, et al., have a dark gray-neutral green color, given by the dyes used such as $Fe_2O_3$ in 1.4 to 2.5%, CoO from 0.02 to 0.04%, Se from 0.0001 to 0.004%, MnO from 0.005 to 0.5 and CeO from 0.05 to 1% with a light transmission of illuminant A less than 15%. These glasses are used as privacy glass or panoramic roofs in automobiles, as well as used in construction.

US patent No. 7,754,632 Delmotte, et al, uses concentrations of MnO up to 600 ppm and $TiO_2$ less than 0.1% in addition of other oxides such as $Fe_2O_3$ 1.1 to 1.5% (total iron), Co 150 to 200 ppm, $Cr_2O_3$ 25 at 100 ppm and Se 10 at 50 ppm, to achieve optical characteristics of light transmission of illuminant A less than 20% for thicknesses of 4 mm.

US Patent No. 8,785,338 to Tsuzuki, et al refers to a composition of a silica-sodium-calcium glass with contents of 0.70 to 1.70% by mass of $Fe_2O_3$ (total iron), 0.15 to 0.45% by mass of FeO (oxide ferrous), 0-0.8% by mass of $TiO_2$, 100 to 350 ppm of CoO, 0 to 60 ppm of Se, 100 to 700 ppm of $Cr_2O_3$ and 3 to 150 ppm of MnO, which has a ratio ($Fe^{2+}/Fe^{3+}$) of ferrous ion to ferric ion of from 0.20 to 0.80. This patent claims that this glass has superior ultraviolet radiation absorption and infrared radiation absorption performance (thermal insulation performance), as well as adequate transparency, achieved thanks to the use of $TiO_2$ preferably in ranges from 0 to 0.5%.

US Patent No. 9,120,695 to Lee, et al., features the following glass composition: 1.4 to 2% $Fe_2O_3$ with an FeO content of 10 to 30% (with respect to total iron), 0.02 to 0.035% CoO, 0.0015 to 0.004% Se and 0.005 to 0.5% MnO. Optical characteristics of light transmission of illuminant A of less than 15% and ultraviolet ray transmission of 2% or less are reported.

The dark green glasses of US Patent No. 9,617,182 by Cho, et al. (April 11, 2017), use as dye 1.2 to 2% of total $Fe_2O_3$, 0.0220 to 0.04% of CoO, 0.002 to 0.0035% of Se and 0.01 to 0.04% of $Cr_2O_3$, wherein the weight ratio of (CoO+$Cr_2O_3$) to Se (= [CoO+$Cr_2O_3$]/Se) is 13 to 25 and the weight ratio of CoO to $Cr_2O_3$ (= CoO/$Cr_2O_3$) is 0.9 to 1.8. The glass exhibits a visible light transmittance ($T_{LA}$) of 15% or less, a direct solar energy transmittance ($T_{DS}$) of 16% or less, and an ultraviolet radiation transmittance ($T_{UV}$) of 3% or less, measured for a 4 mm reference thickness.

US Patent No. 7,902,097 B2 to Cid-Aguilar et al., uses concentrations of: 0 to 30 ppm of Co3O4, 1 to 20 ppm of Se, 20 to 200 ppm of CuO and 0.30 to 0.70% of $Fe_2O_3$ to obtain a neutral gray glass, with optical characteristics of light transmission with illuminant A greater than 65%, total solar energy transmission equal to or less than 60%, ultraviolet radiation transmission less than 46% and a dominant wavelength of 490 to 600 nm. This patent adds components such as carbon from 0.01 to 0.07% or sodium nitrate from 0.2 to 1.2% for modifying the redox state of iron and copper oxide, since, in combination with the other dyes, it is used as an alternative to obtain the gray tone, partially replacing the addition of titanium oxide and cobalt oxide.

As can be read from the above, iron is present in glass (silica-sodium-calcium) in two compounds that depend on the oxidation state of the iron: if the iron is present as $Fe^{2+}$, the compound formed is ferrous oxide (FeO). If iron is present as $Fe^{3+}$, ferric oxide ($Fe_2O_3$) would be present. Each ion confers different properties; the ferrous ion has a wide and strong absorption band centered at 1050 nm, which results in a decrease in infrared radiation. Furthermore, this band extends into the visible region, decreasing light transmission and imparting a bluish coloration to the glass. On the other hand, the ferric ion features a strong absorption band located in the ultraviolet region, which evidently prevents

its transmission through the glass and, in addition, it shows two weak

$$2Fe_3^{} \rightarrow 4FeO + O_2$$

bands in the visible region located between 420 and 440 nm, which cause

a slight decrease in light transmission and a yellowing of the glass.

Generally, the iron in glass and its amount of ferrous oxide are expressed in the form of $Fe_2O_3$. It is common in the industry to express the amount of ferrous or ferric oxide as a percentage of total iron. The balance between ferrous and ferric oxide has a direct effect on the color and transmittance characteristics of the glass, represented as:

$$\%Redox\ (\%Ferrous) = \frac{FeO\ (expressed\ as\ Fe_2O_3)\ x\ 100}{Total\ Fe_2O_3}$$

The above means that the greater the amount of ferric ion ($Fe^{3+}$) present in the glass, the greater the absorption of ultraviolet radiation and the light transmission will increase; as well as the yellowish tone; but, if the content of ferrous ion ($Fe^{2+}$) increases as a result of chemical reduction of $Fe_2O_3$, the absorption of infrared radiation will increase, but the absorption of ultraviolet radiation will decrease and so will the light transmission.

The variation in the concentration of FeO in relation to $Fe_2O_3$ gives rise to a color change in the glass. The hue shift can be modified from yellow through green, blue to amber. The color changes as follows (according to experimental results):

Yellow-Low ferric (12%) - High light transmission (High ferric ion)

Yellow-Greenish (16%)
Green-Yellowish (20%)
Green (25% typical green glass value)
Bluish Green (29%)
Greenish Blue (35%)
Blue (50%)
Olive Green (60%)
Champagne (65%)
Amber - High ferrous (75%) - Low light transmission (low ferric ion)

To control the balance between ferrous oxide and ferric oxide necessary to achieve solar control glass, it is necessary to establish the mixing and melting atmosphere conditions; for the former case, the concentration of reducing agents such as carbon and oxidizing agents, such as sodium sulfate and sodium nitrate, is adjusted. Regarding fusion conditions, it is necessary to adjust the atmosphere with greater or lesser oxygen content depending on the thermal performance and shade of the desired glass.

Additionally, it is well known that titanium oxide also acts as a dye and when used in combination with $Fe_2O_3$, it is possible to obtain a further reduction of the transmission of ultraviolet radiation to a point where the desired visibility transmission is achieved.

K. M. Fyles in the article Modern Automotive Glasses, Glass Technology, vol 37, February, 1996, pp. 2-6, considers that iron is the most important dye in automotive glass since it is a component available at a low price that absorbs undesirable ultraviolet radiation (ferrous ion) and, in addition, a large amount of infrared radiation (ferrous ion).

Gordon F. Bresterm et al, in the article "The color of ironcontaining glasses of varying composition", Journal of the Society of Glass Technology, New York, USA, April, 1950, pp. 332-406, mentions color changes caused by systematically varying the composition of ironcontaining silicate and non-silica glasses evaluated in terms of visual color, spectral transmission and chromaticity.

Other articles also describe the importance of the balance between ferrous and ferric oxides in glasses, such as the one written by N. E. Densem; The equilibrium between ferrous and ferric oxides in glasses; Journal of the Society of Glass Technology, Glasgow, England, May 1937, pp. 374-389; J. C. Hostetter and H. S. Roberts, "Note on the dissociation of Ferric Oxide dissolved in glass and its relation to the color of ironbearing glasses"; Journal of the American Ceramic Society, USA, September, 1921, pp. 927-938.

Many books and scientific articles have been published on the composition of colored glass with infrared and ultraviolet radiation absorption characteristics.

C.R. Bamford, in the book Color Generation and Control in Glass, Glass Science and Technology (Elsevier Science Publishing Co., Amsterdam, 1977) describes the principle of glass coloring methods and applications. In this book the author considers that three elements govern the color of the light transmitted by a glass, being the color of the incident light, the interaction of the glass with that light and the interaction of the transmitted light with the eye of the observer. The procedures require the spectral transmission data of the glass with the corresponding glass thickness and viewing angle.

With respect to titanium oxide ($TiO_2$) in silica-sodium-calcium glasses, the most stable form of titanium in glasses is the tetravalent ($Ti^{4+}$). The trivalent form could confer coloration however, this effect is not observed in silica-sodium-calcium glass. In the document "Effects of titanium dioxide on glass" written by Beals MD, The Glass Industry, September 1963, pp 495-531, he describes the interest that titanium dioxide has been shown as a glass component. The effects produced by the use of titanium dioxide include comments that $TiO_2$ greatly increases the refractive index, increases the absorption of light in the ultraviolet region, and that viscosity and surface tension are reduced. From data on the use of titanium dioxide in enamels, it was observed that $TiO_2$ increases chemical durability and acts as a flux. In general, clear glasses containing titanium dioxide can be found in all common glass-forming systems (borates, silicates and phosphates). The various glass-forming regions for titanium dioxide-containing systems are not grouped together in one place, as the organization of the discussion is based more on the properties of a use of titanium dioxide-containing glasses rather than their own constitution.

On the other hand, the addition of selenium to silica-sodium-calcium glass can produce a pink color due to the presence of atomic selenium. Selenium is one of the most used physical bleaches for glass with traces of iron coming as an undesirable impurity in the raw materials, because its coloring neutralizes the ferrous and ferric ions present in the glass.

The combination of iron oxide and selenium in silica-sodium-calcium glass confers a reddish-brown coloration and a decrease in light transmission, due to an absorption band located in the visible region between 490 and 500nm (band similar to atomic selenium). This band extends towards the ultraviolet region, also causing a decrease in this type of transmission in the glass.

The intensity of the coloration and the final properties of the glass are a function of the concentration of iron oxide and selenium in the glass.

It is well known that copper has played an important aspect in the production of glass, ceramics and colored pigments. For example, the coloring of Persian ceramics has been recognized by its tone conferred by copper. Of special interest to ceramic artists are turquoise blue and especially dark Egyptian and Persian blue (Waldemar A. Weil; Colored Glasses, Society of Glass Technology, Great Britain, P.154-167, 1976).

Copper has been used in glass compositions, not only in those of the silica-sodium-calcium type, but in some others, such as those that contain, for example, borosilicate. Therefore, the color developed depends on the base of the glass, its concentration and its oxidation state.

In the case of a sodium-silica-calcium base glass, copper in oxide form imparts a blue coloration of a greenish tone, specifically turquoise, however, in glass, copper can be in its monovalent state, which does not impart color. Thus, the blue-green coloration depends not only on the amount of copper present, but also on the ionic balance between the cuprous and cupric states. The maximum absorption of copper oxide is found in a band centered at 780 nm and a secondary weak maximum peak is present at 450 nm, which disappears at high soda contents (around 40 wt%) (C. R. Bamford Color Generation and Control in Glass, Glass Science and Technology, Elsevier Scientific Publishing Company, pp. 48-50, Amsterdam, 1977).

The incorporation of copper oxide (CuO), in combination with iron oxide, cobalt oxide, selenium and titanium oxide proves to be an alternative in order to obtain a gray tone with low light transmission for use in the automotive or construction industry, where a glass having a low light transmission of illuminant A ($T_{LA}$) no greater than 15%, direct solar energy transmission ($T_{DS}$) no greater than 14%, near infrared radiation transmission ($T_{IR}$) no greater than 14%, an ultraviolet radiation transmission (Tuv) no greater than 8%, a total solar energy transmission ($T_{TS}$) no greater than 38%, a purity no greater than 50% and a dominant wavelength of 480-590 nm when it has a nominal thickness of 3.85 mm is needed.

It has been proven in the industrial production that the addition of CuO is feasible in concentrations of less than 120 ppm for a thickness of 4 mm and less than 100 ppm for thicknesses of 6 mm.

Glass can also be manufactured in smaller thicknesses, as is the case with glass used in the manufacture of laminated systems. If higher concentrations of CuO are present, during the formation process within the float chamber, a reduction process attributable to the process atmosphere could occur, with the presence of a reddish color on the glass surface, which is observed in reflection. This effect is related to the residence time and the advancing speed of the glass ribbon, which means that, at lower speeds, it will be necessary to reduce the CuO content in glass or adjust the reducing conditions in the float chamber.

**OBJECTS OF THE INVENTION**

A main object of the present invention is a gray glass with low light transmission of illuminant A ($T_{LA}$) no greater than 15%, a direct solar energy transmission ($T_{DS}$) no greater than 14%, a near infrared radiation transmission ($T_{IR}$) no greater than 14%, an ultraviolet radiation transmission (Tuv) no greater than 8%, a total solar energy transmission ($T_{TS}$) no greater than 38%, a purity no greater than 50% and a dominant wavelength of 480-590 nm when it has a nominal thickness of 3.85 mm, manufactured by the float process.

Another object of the present invention is the use of copper oxide as a partial replacement for cobalt oxide ($Co_3O_4$). The feasibility of its addition in flat glass manufactured by the float process has been demonstrated to levels close to 120 ppm without a reduction effect due to the conditions of the tin chamber. Likewise, $TiO_2$ is incorporated as an additional element to the iron oxide to provide an additional reduction in the transmission of ultraviolet radiation.

An additional object of the present invention is also to obtain a gray glass composition with low light transmission, which includes additional elements such as carbon or sodium nitrate to modify the redox state of the iron oxide.

The glass of this invention avoids the use of coloring compounds such as nickel, chromium, manganese or rare earth oxides, mainly erbium oxide ($Er_2O_3$).

**DETAILED DESCRIPTION OF THE INVENTION**

The present invention refers to a gray glass composition that, although its use in the automotive industry is mentioned as its main application, said use is not limited to other fields such as the construction industry or other applications such as, for example, as a substrate to be coated by one or more thin layers applied via cathodic vacuum erosion process (MSVD), chemical vapor deposition (CVD) or other techniques.

The typical composition of a silica-sodium-calcium glass formed by the float glass process for the automotive industry is characterized by the following formulation based on the percentage by weight with respect to the total weight of the glass:

| Components | % Weight: |
|---|---|
| $SiO_2$ | 68 to 75 |
| $Al_2O_3$ | 0 to 5 |
| CaO | 5 to 15 |
| MgO | 0 to 10 |
| $Na_2O$ | 10 to 18 |
| $K_2O$ | 0 to 5 |
| $SO_3$ | 0.05 to 0.3 |

The glass composition of the present invention is based on a silica-sodium-calcium glass to which the following dyes were added in order to obtain a gray color:

| Components | % Weight: |
|---|---|
| $Fe_2O_3$ | 1.65 to 3.0 |
| FeO | 0.28 to 1.2 |
| %Ferrous (%Reduction) | 15 to 40% |
| $Co_3O_4$ | 0.030 to 0.040 |
| Se | 0.0020 to 0.010 |
| CuO | 0.00050 to 0.050 |
| $TiO_2$ | 0.01 to 1.0 |
| Redox adjusting agents added to the mixture | |
| $NaNO_3$ | 0.01 to 1.0% |
| Carbon | 0 to 0.07% |

The main purpose of adding sodium nitrate ($NaNO_3$) and carbon to the composition is to modify the oxidation state of iron so as to achieve the optimal level of direct heat transfer ($T_{DS}$). Also, sodium nitrate helps optimizing retention of selenium in the glass.

This gray glass has an illuminating light transmission A ($T_{LA}$) of no more than 15%, a direct solar energy transmission ($T_{DS}$) of no more than 14%, a near-infrared radiation transmission ($T_{IR}$) of no more than 14%, a ultraviolet radiation transmission (Tuv) no greater than 8%, a total solar energy transmission ($T_{TS}$) no greater than 38%, a purity no greater than 50% and a dominant wavelength of 480-590 nm when it has a thickness for example between 1.4 to 6 mm, from 1.6 to 5 mm, and more preferably 3.85mm. The glass of the present invention avoids the use of coloring compounds such as nickel, chromium, manganese or rare earth oxides, mainly erbium oxide ($Er_2O_3$).

The following examples show the physical properties of illuminant light A transmission ($T_{LA}$), direct solar energy transmission ($T_{DS}$), near-infrared radiation transmission ($T_{IR}$), ultraviolet radiation transmission (Tuv), total solar energy transmission ($T_{TS}$). The color transmission (L*, a* and b*), color purity and a dominant wavelength ($\lambda$), for a 3.85 glass.

## TABLES 1 AND 2

Tables 1 and 2 (Examples 1 to 14) show the experimental results of the composition of the present invention with the combination of iron oxide ($Fe_2O_3$), cobalt oxide ($Co_3O_4$), selenium (Se), copper oxide, and titanium oxide ($TiO_2$). In addition, they contain 0.66% sodium nitrate ($NaNO_3$) as an oxidizing agent in the mixture, without the addition of carbon.

**TABLE 1**

| Examples | 1 | 2 | 3 | 4 | 5 | 6 | 7 |
|---|---|---|---|---|---|---|---|
| | | | | | | | |
| Dyes in weight percent | | | | | | | |
| $Fe_2O_3$ | 1.85 | 1.85 | 1.85 | 1.85 | 2.30 | 2.30 | 2.30 |
| $Co_3O_4$ | 0.0295 | 0.0295 | 0.0295 | 0.0295 | 0.0330 | 0.0330 | 0.0330 |

(continued)

| Examples | 1 | 2 | 3 | 4 | 5 | 6 | 7 |
|---|---|---|---|---|---|---|---|
| CuO | 0.0075 | 0.0075 | 0.0075 | 0.0075 | 0.0075 | 0.0075 | 0.0075 |
| Se | 0.0026 | 0.0033 | 0.0023 | 0.0027 | 0.0045 | 0.0035 | 0.0042 |
| $TiO_2$ | 0.056 | 0.056 | 0.056 | 0.056 | 0.056 | 0.056 | 0.056 |
| % Ferrous (% Reduction) | 17.9 | 15.3 | 17.8 | 17.8 | 20.6 | 15.7 | 15.4 |
| FeO | 0.332 | 0.282 | 0.330 | 0.330 | 0.475 | 0.361 | 0.355 |
| %Sodium Nitrate ($NaNO_3$) in mixture | 0.66 | 0.66 | 0.66 | 0.66 | 0.66 | 0.66 | 0.66 |
| %Coal (Coke) in mixture | 0.00 | 0.00 | 0.00 | 0.00 | 0.00 | 0.00 | 0.00 |
| | | | | | | | |
| | Solar properties 3.85 mm (%) | | | | | | |
| Ultraviolet radiation transmission (Tuv) | 4.9 | 4.3 | 5.3 | 4.8 | 1.5 | 2.1 | 1.5 |
| Light transmission illuminant A ($T_{LA}$) | 16.8 | 15.1 | 18.8 | 16.1 | 8.0 | 12.2 | 10.2 |
| Direct solar energy transmission ($T_{DS}$) | 15.1 | 16.2 | 16.2 | 14.8 | 6.9 | 11.5 | 10.6 |
| Near infrared radiation transmission ($T_{IR}$) | 12.8 | 16.6 | 13.0 | 12.8 | 6.3 | 11.1 | 11.4 |
| Total solar energy transmission ($T_{TS}$) | 37.0 | 37.8 | 37.8 | 36.8 | 31.0 | 34.4 | 33.7 |
| | | | | | | | |
| | Transmitted Color Illuminant D65 Obs. 10° (ASTM E308) 3.85 mm | | | | | | |
| L* | 48.8 | 45.7 | 51.7 | 48.0 | 33.7 | 41.7 | 37.9 |
| a* | -5.5 | -1.9 | -7.1 | -5.4 | -2.6 | -4.8 | -2.9 |
| b* | -2.9 | 1.9 | -4.4 | -3.0 | 6.0 | 2.7 | 6.0 |
| Dominant wavelength (nm) | 483.3 | 552.2 | 482.4 | 483.1 | 578.2 | 530.2 | 576.4 |
| %Purity | 8.2 | 2.8 | 11.0 | 8.4 | 12.9 | 3.6 | 11.9 |

**TABLE 2**

| Examples | 8 | 9 | 10 | 11 | 12 | 13 | 14 |
|---|---|---|---|---|---|---|---|
| | | | | | | | |
| | Dyes in weight percent | | | | | | |
| $Fe_2O_3$ | 2.30 | 2.30 | 2.30 | 2.30 | 2.30 | 2.30 | 2.30 |
| $Co_3O_4$ | 0.0330 | 0.0330 | 0.0330 | 0.0365 | 0.0365 | 0.0365 | 0.0365 |
| CuO | 0.0075 | 0.0075 | 0.0075 | 0.0150 | 0.0150 | 0.0150 | 0.0150 |
| Se | 0.0042 | 0.0032 | 0.0025 | 0.0086 | 0.0083 | 0.0071 | 0.0049 |
| $TiO_2$ | 0.056 | 0.056 | 0.056 | 0.056 | 0.056 | 0.056 | 0.056 |
| %Ferrous (% Reduction) | 16.0 | 16.7 | 23.3 | 16.5 | 17.3 | 18.3 | 23.1 |
| FeO | 0.368 | 0.384 | 0.537 | 0.381 | 0.397 | 0.420 | 0.531 |
| %Sodium Nitrate ($NaNO_3$) in mixture | 0.66 | 0.66 | 0.66 | 0.66 | 0.66 | 0.66 | 0.66 |
| %Coal (Coke) in mixture | 0.00 | 0.00 | 0.00 | 0.00 | 0.00 | 0.00 | 0.00 |
| | | | | | | | |

(continued)

| Examples | 8 | 9 | 10 | 11 | 12 | 13 | 14 |
|---|---|---|---|---|---|---|---|
| | Solar properties 3.85 mm (%) | | | | | | |
| Ultraviolet radiation transmission (Tuv) | 1.5 | 2.4 | 3.1 | 0.1 | 0.1 | 0.3 | 0.8 |
| Light transmission illuminant A ($T_{LA}$) | 10.1 | 12.5 | 12.1 | 3.1 | 3.2 | 4.3 | 5.9 |
| Direct solar energy transmission ($T_{DS}$) | 10.2 | 11.1 | 8.3 | 6.5 | 6.1 | 6.1 | 5.1 |
| Near infrared radiation transmission ($T_{IR}$) | 10.7 | 9.9 | 4.7 | 9.7 | 8.8 | 7.8 | 4.5 |
| Total solar energy transmission ($T_{TS}$) | 33.5 | 34.1 | 32.0 | 30.7 | 30.4 | 30.5 | 29.7 |
| | | | | | | | |
| | Transmitted Color Illuminant D65 Obs.10° (ASTM E308) 3.85 mm | | | | | | |
| L* | 37.8 | 42.6 | 43.0 | 18.5 | 19.0 | 23.1 | 29.1 |
| a* | -2.9 | -6.2 | -9.6 | 5.8 | 5.0 | 3.4 | -3.5 |
| b* | 6.0 | 0.2 | -6.4 | 19.5 | 18.5 | 15.5 | 6.0 |
| Dominant wavelength (nm) | 576.7 | 492.2 | 481.9 | 590.3 | 590.0 | 589.2 | 572.9 |
| %Purity | 12.0 | 5.1 | 17.6 | 55.7 | 52.6 | 40.6 | 14.6 |

TABLE 3

Table 3 (Examples 15 to 18) shows the experimental results of the composition of the present invention with the combination of iron oxide ($Fe_2O_3$), cobalt oxide ($Co_3O_4$), selenium (Se), copper oxide, and titanium oxide ($TiO_2$). In addition, 0.16% sodium nitrate ($NaNO_3$) and 0.04% carbon (coke type) are incorporated into the mixture.

**TABLE 3**

| Examples | 15 | 16 | 17 | 18 |
|---|---|---|---|---|
| | | | | |
| | Dyes in weight percent | | | |
| $Fe_2O_3$ | 1.90 | 1.90 | 1.90 | 1.90 |
| $Co_3O_4$ | 0.0310 | 0.0310 | 0.0310 | 0.0310 |
| CuO | 0.0075 | 0.0075 | 0.0075 | 0.0075 |
| Se | 0.0025 | 0.0037 | 0.0061 | 0.0079 |
| $TiO_2$ | 0.044 | 0.044 | 0.044 | 0.044 |
| %Ferrous (%Reduction) | 33.1 | 33.9 | 35.9 | 38.5 |
| FeO | 0.628 | 0.644 | 0.682 | 0.731 |
| %Sodium Nitrate ($NaNO_3$) in mixture | 0.16 | 0.16 | 0.16 | 0.16 |
| %Coal (Coke) in mixture | 0.04 | 0.04 | 0.04 | 0.04 |
| | | | | |
| | Solar properties 3.85 mm (%) | | | |
| Ultraviolet radiation transmission (Tuv) | 4.2 | 1.8 | 0.3 | 0.1 |
| Light transmission illuminant A ($T_{LA}$) | 10.9 | 7.3 | 3.7 | 2.2 |
| Direct solar energy transmission ($T_{DS}$) | 7.1 | 4.9 | 2.8 | 2.0 |
| Near infrared radiation transmission ($T_{IR}$) | 3.2 | 3.0 | 2.5 | 2.1 |

(continued)

| | Solar properties 3.85 mm (%) | | | |
|---|---|---|---|---|
| Total solar energy transmission ($T_{TS}$) | 31.1 | 29.5 | 28.0 | 27.4 |
| | | | | |
| | Transmitted Color Illuminant D65 Obs. 10° (ASTM E308) 3.85 mm | | | |
| L* | 41.3 | 33.3 | 22.1 | 15.6 |
| a* | -8.8 | -7.0 | -2.5 | 0.0 |
| b* | -8.9 | -1.3 | 9.5 | 13.2 |
| Dominant wavelength (nm) | 479.9 | 487.5 | 582.0 | 586.6 |
| %Purity | 21.4 | 9.3 | 26.3 | 42.4 |

## TABLES 4 AND 5

Tables 4 and 5 (Examples 19 to 31) show the experimental results of the composition of the present invention with the combination of iron oxide ($Fe_2O_3$), cobalt oxide ($Co_3O_4$), selenium (Se), copper oxide, and titanium oxide ($TiO_2$). Likewise, they contain 0.16% sodium nitrate ($NaNO_3$) and 0.02% carbon in the mixture.

### TABLE 4

| Examples | 19 | 20 | 21 | 22 | 23 | 24 |
|---|---|---|---|---|---|---|
| | | | | | | |
| Dyes in weight percent | | | | | | |
| $Fe_2O_3$ | 1.90 | 1.90 | 1.90 | 1.90 | 1.90 | 1.90 |
| $Co_3O_4$ | 0.0290 | 0.0290 | 0.0290 | 0.0290 | 0.0290 | 0.0290 |
| CuO | 0.0050 | 0.0050 | 0.0050 | 0.0050 | 0.0050 | 0.0050 |
| Se | 0.0060 | 0.0046 | 0.0037 | 0.0047 | 0.0067 | 0.0037 |
| $TiO_2$ | 0.044 | 0.044 | 0.044 | 0.044 | 0.044 | 0.044 |
| %Ferrous (%Reduction) | 23.6 | 24.6 | 25.4 | 26.0 | 21.8 | 24.6 |
| FeO | 0.448 | 0.467 | 0.482 | 0.495 | 0.414 | 0.468 |
| %Sodium Nitrate ($NaNO_3$) in mixture | 0.16 | 0.16 | 0.16 | 0.16 | 0.16 | 0.16 |
| %Coal (Coke) in mixture | 0.02 | 0.02 | 0.02 | 0.02 | 0.02 | 0.02 |
| | | | | | | |
| Solar properties 3.85 mm (%) | | | | | | |
| Ultraviolet radiation transmission ($T_{UV}$) | 0.9 | 1.5 | 2.3 | 1.3 | 0.7 | 2.4 |
| Light transmission illuminant A ($T_{LA}$) | 6.3 | 8.3 | 10.1 | 8.4 | 6.2 | 10.1 |
| Direct solar energy transmission ($T_{DS}$) | 6.6 | 7.2 | 7.9 | 6.7 | 7.2 | 8.1 |
| Near infrared radiation transmission ($T_{IR}$) | 7.1 | 6.5 | 6.1 | 5.8 | 8.7 | 6.4 |
| Total solar energy transmission ($T_{TS}$) | 30.8 | 31.3 | 31.8 | 30.9 | 31.3 | 31.9 |
| | | | | | | |
| Transmitted Color Illuminant D65 Obs. 10° (ASTM E308) 3.85 mm | | | | | | |
| L* | 28.9 | 34.1 | 38.2 | 34.4 | 28.2 | 38.2 |
| a* | 2.6 | -1.6 | -4.2 | -2.1 | 4.5 | -4.3 |

(continued)

| | Transmitted Color Illuminant D65 Obs. 10° (ASTM E308) 3.85 mm | | | | | |
|---|---|---|---|---|---|---|
| b* | 13.4 | 7.4 | 2.6 | 8.4 | 17.5 | 2.0 |
| Dominant wavelength (nm) | 588.8 | 583.1 | 535.2 | 582.5 | 589.6 | 523.8 |
| %Purity | 31.0 | 15.5 | 3.8 | 17.5 | 40.6 | 3.1 |

TABLE 5

| Examples | 25 | 26 | 27 | 28 | 29 | 30 | 31 |
|---|---|---|---|---|---|---|---|
| | Dyes in weight percent | | | | | | |
| $Fe_2O_3$ | 1.85 | 1.85 | 1.85 | 1.85 | 2.00 | 2.00 | 2.00 |
| $Co_3O_4$ | 0.0305 | 0.0305 | 0.0305 | 0.0305 | 0.0320 | 0.0320 | 0.0320 |
| CuO | 0.0050 | 0.0050 | 0.0050 | 0.0050 | 0.0030 | 0.0030 | 0.0030 |
| Se | 0.0040 | 0.0040 | 0.0040 | 0.0047 | 0.0030 | 0.0031 | 0.0035 |
| $TiO_2$ | 0.044 | 0.044 | 0.044 | 0.044 | 0.044 | 0.044 | 0.044 |
| %Ferrous (%Reduction) | 24.3 | 24.0 | 22.5 | 23.9 | 20.4 | 22.0 | 19.8 |
| FeO | 0.450 | 0.443 | 0.416 | 0.441 | 0.408 | 0.439 | 0.397 |
| %Sodium Nitrate ($NaNO_3$) in mixture | 0.16 | 0.16 | 0.16 | 0.16 | 0.16 | 0.16 | 0.16 |
| %Coal (Coke) in mixture | 0.02 | 0.02 | 0.02 | 0.02 | 0.02 | 0.02 | 0.02 |
| | | | | | | | |
| | Solar properties 3.85 mm (%) | | | | | | |
| Ultraviolet radiation transmission ($T_{UV}$) | 2.6 | 3.8 | 3.3 | 2.2 | 4.6 | 4.9 | 4.5 |
| Light transmission illuminant A ($T_{LA}$) | 10.4 | 10.7 | 10.5 | 9.0 | 12.8 | 12.3 | 12.5 |
| Direct solar energy transmission ($T_{DS}$) | 8.6 | 9.0 | 9.5 | 8.1 | 11.0 | 10.1 | 11.0 |
| Near infrared radiation transmission ($T_{IR}$) | 7.2 | 7.3 | 8.3 | 7.5 | 8.6 | 7.4 | 9.1 |
| Total solar energy transmission ($T_{TS}$) | 32.3 | 32.6 | 32.9 | 31.9 | 34.0 | 33.4 | 34.0 |
| | | | | | | | |
| | Transmitted Color Illuminant D65 10° Obs (ASTM E308) 3.85 mm | | | | | | |
| L* | 38.5 | 38.8 | 38.6 | 35.3 | 43.2 | 42.4 | 42.1 |
| a* | -2.6 | -1.1 | -1.2 | 0.0 | -4.3 | -3.9 | -2.1 |
| b* | 3.6 | 2.8 | 2.9 | 7.6 | -3.7 | -3.5 | 0.7 |
| Dominant wavelength (nm) | 566.5 | 579.4 | 579.2 | 586.5 | 480.9 | 480.7 | 506.3 |
| %Purity | 7.0 | 5.5 | 5.7 | 15.4 | 9.3 | 8.7 | 1.1 |

TABLE 6

Table 6 (Examples 32 to 34) shows the experimental results of the composition of the present invention with the combination of iron oxide ($Fe_2O_3$), cobalt oxide ($Co_3O_4$), selenium (Se), copper oxide, and titanium oxide ($TiO_2$). In addition, they contain 0.16% sodium nitrate ($NaNO_3$) and 0.030% carbon.

**TABLE 6**

| Examples | 32 | 33 | 34 |
|---|---|---|---|
| | | | |
| Dyes in weight percent | | | |
| $Fe_2O_3$ | 2.00 | 2.00 | 2.00 |
| $Co_3O_4$ | 0.0320 | 0.0320 | 0.0320 |
| CuO | 0.0020 | 0.0020 | 0.0020 |
| Se | 0.0032 | 0.0027 | 0.0030 |
| $TiO_2$ | 0.220 | 0.220 | 0.220 |
| %Ferrous (% Reduction) | 24.6 | 25.7 | 22.9 |
| FeO | 0.493 | 0.513 | 0.458 |
| %Sodium Nitrate ($NaNO_3$) in mixture | 0.16 | 0.16 | 0.16 |
| % Coal (Coke) in mixture | 0.03 | 0.03 | 0.03 |
| | | | |
| Solar properties 3.85 mm (%) | | | |
| Ultraviolet radiation transmission ($T_{UV}$) | 3.5 | 4.6 | 5.2 |
| Light transmission illuminant A ($T_{LA}$) | 10.7 | 12.1 | 12.5 |
| Direct solar energy transmission ($T_{DS}$) | 8.3 | 8.8 | 9.9 |
| Near infrared radiation transmission ($T_{IR}$) | 5.6 | 5.1 | 6.6 |
| Total solar energy transmission ($T_{TS}$) | 32.1 | 32.4 | 33.2 |
| | | | |
| Transmitted Color Illuminant D65 | | | |
| Obs. 10°(ASTM E308) 3.85 mm | | | |
| L* | 40.0 | 42.7 | 42.8 |
| a* | -5.5 | -6.9 | -4.6 |
| b* | -3.1 | -6.7 | -4.1 |
| Dominant wavelength (nm) | 482.8 | 480.1 | 480.7 |
| %Purity | 9.8 | 16.1 | 10.2 |

The main purpose of adding sodium nitrate ($NaNO_3$) and carbon to the composition is to modify the oxidation state of iron in order to achieve the optimal level of direct heat transfer ($T_{DS}$). Color and privacy are adjusted by optimizing the percentages of dyes described in this invention.

The physical properties of the glasses obtained were evaluated in accordance with internationally accepted standards. Specifications for color determination, such as dominant wavelength and excitation purity, have been derived from the Tristimulus values (X, Y, Z) that have been adopted by the International Commission on Illumination (C.I.E.), as a direct result of experiments involving many observers. These specifications can be determined by calculating the trichromatic coefficients x, y, z of the Tristimulus values that correspond to the colors red, green and blue respectively. The trichromatic values are graphed on the chromaticity diagram and compared with the coordinates of the D65 illuminant, considered the lighting standard. The comparison provides the information to determine the purity of color excitation and its dominant wavelength. The dominant wavelength defines the wavelength of the color and its value is in the visible range, from 380 to 780 nm, while for the excitation purity, the lower its value, the closer it tends to be a neutral color.

The calculation of the ultraviolet radiation transmission (Tuv) is adjusted to the range of solar UV radiation, so it was evaluated in the range of 300 to 400 nm in intervals of 10 nm, according to what is indicated in the ISO/DIS 13837 standard.

For the evaluation of light transmission, illuminant "A" ($T_{LA}$) was used, in the wavelength range of 400 to 800 nanometers, integrating values in intervals of 10 nm. Color transmission (L*, a* and b*) was calculated according to ASTM E308 (C.I.E. D65 observer at 10°).

The direct solar energy transmission ($T_{DS}$) values were evaluated in the range of 300 to 2500 nm with intervals of 5, 10 and 50 nm, according to the ISO/DIS 13837 standard.

In infrared transmission ($T_{IR}$), the range included in the radiation of the solar spectrum is contemplated, having a range of 800 to 2500 nm, with intervals of 50 nm, using the values of the ISO/DIS 13837 standard.

The total solar energy transmission ($T_{TS}$) was evaluated in the range of 300 to 2500 nm considering (stationary) wind speed of 4 m/s, according to the ISO/DIS 13837 standard.

The neutral gray glass of this invention can be manufactured by the float glass process from a thickness of 1.4 mm to 6 mm, however, it is not limited only to this range of thicknesses and can be processed as tempered, in double window glazing systems, lamination process or as a substrate covered by one or more layers.

This glass has the following properties: light transmission with illuminant A ($T_{LA}$) no greater than 15%, direct solar energy transmission ($T_{DS}$) no greater than 14%, near infrared radiation transmission ($T_{IR}$) no greater than 14%, ultraviolet radiation transmission (Tuv) no greater than 8%, total solar energy transmission ($T_{TS}$) no greater than 38% and purity no greater than 50%.

**Claims**

1. A low light transmission gray glass formed from a composition of soda-silica-calcium glass and a dye, wherein the dye comprises: 1.65 to 3.0% $Fe_2O_3$; 15 to 40% $Fe^{2+}$ (ferrous); from 0.28 to 1.2% FeO, expressed as $Fe_2O_3$; $Co_3O_4$ from 0.030 to 0.040%; Selenium from 0.0020 to 0.010%; CuO from 0.00050 to 0.050%; and $TiO_2$ from 0.01 to 1%, wherein said glass has a light transmission of illuminating A ($T_{LA}$) no greater than 15%, a direct solar energy transmission ($T_{DS}$) no greater than 14%, a near infrared radiation transmission ($T_{IR}$) no greater than 14%, an ultraviolet radiation transmission (Tuv) no greater than 8%, and a total solar energy transmission ($T_{TS}$) no greater than 38%.

2. The glass according to claim 1, wherein said glass is produced with a purity of no more than 50% and a dominant wavelength of 480-590 nm when it has a thickness preferably of 3.85mm.

3. The glass according to claim 1, wherein the base glass composition comprises: 68 to 75% $SiO_2$; 0 to 5% $Al_2O_3$; 5 to 15% CaO; 0 to 10% MgO; 10 to 18% $Na_2O$; 0 to 5% $K_2O$ and 0.05 to 0.3% $SO_3$.

4. The glass according to claim 1, wherein the coloring glass composition further comprises: 0.01 to 1.0% $NaNO_3$ in the mixture to adjust to modify the redox state of the iron oxide.

5. The glass according to claim 1, wherein the coloring glass composition further comprises: 0 to 0.07% carbon to modify the redox state of the iron oxide.

6. A glass sheet formed with the glass and dye composition claimed in claim 1, which is formed by means of a float process.

7. The glass sheet of claim 6, which has the following color coordinates measured under illuminant D65, L* from 51.7 to 15.6; a* from -9.6 to 4.5; b* from -5.5 to 19.5; a* from -10 to 5, b* from -5 to 15, and an excitation purity no greater than 50% for a thickness of 3.85 mm.

8. The glass sheet according to claim 6, wherein the dominant wavelength is 480 to 590 nm.

# INTERNATIONAL SEARCH REPORT

| International application No. |
|---|
| PCT/MX2021/050029 |

## A. CLASSIFICATION OF SUBJECT MATTER

**See extra sheet**

According to International Patent Classification (IPC) or to both national classification and IPC

## B. FIELDS SEARCHED

Minimum documentation searched (classification system followed by classification symbols)
C03C

Documentation searched other than minimum documentation to the extent that such documents are included in the fields searched

Electronic data base consulted during the international search (name of data base and, where practicable, search terms used)

EPODOC, INVENES, WPI

## C. DOCUMENTS CONSIDERED TO BE RELEVANT

| Category* | Citation of document, with indication, where appropriate, of the relevant passages | Relevant to claim No. |
|---|---|---|
| X | WO 2020046096 A1 (VIDRIO PLANO MEXICO SA DE CV) 05/03/2020, abstract; págs.13, 14; tables 1, 2 and 3, examples 5, 8, 9, 14, 16, 17. | 1-8 |
| A | EP 1036045 A1 (VIDRIO PLANO DE MEXICO S A DE TECNOLOGIA VITRO VIDRIO Y CRIS) 20/09/2000, abstract. | 1-8 |
| A | US 2010144509 A1 (CID-AGUILAR JOSE GUADALUPE ET AL.) 10/06/2010, abstract. | 1-8 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 01/03/2022 | **(02/03/2022)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | M. García Poza<br><br>Telephone No. 91 3495568 |

Form PCT/ISA/210 (second sheet) (January 2015)

## INTERNATIONAL SEARCH REPORT

| | |
|---|---|
| | International application No. |
| | PCT/MX2021/050029 |

### CLASSIFICATION OF SUBJECT MATTER

*C03C3/087* (2006.01)
*C03C4/02* (2006.01)
*C03C4/08* (2006.01)

Form PCT/ISA/210 (extra sheet) (January 2015)

**INTERNATIONAL SEARCH REPORT**

Information on patent family members

International application No.

PCT/MX2021/050029

| Patent document cited in the search report | Publication date | Patent family member(s) | Publication date |
|---|---|---|---|
| WO2020046096 A1 | 05.03.2020 | NONE | |
| US2010144509 A1 | 10.06.2010 | BRPI0922212 A2<br>BRPI0922212 B1<br>CO6382150 A2<br>MX2011006118 A<br>WO2010068083 A1<br>US7902097 B2 | 06.03.2019<br>02.02.2021<br>15.02.2012<br>28.06.2011<br>17.06.2010<br>08.03.2011 |
| EP1036045 A1 | 20.09.2000 | US6080695 A<br>WO9928257 A1<br>ES2209224T T3<br>DE69813011T T2<br>CA2312899 A1<br>CA2312899 C<br>AT236095T T | 27.06.2000<br>10.06.1999<br>16.06.2004<br>11.03.2004<br>10.06.1999<br>21.09.2004<br>15.04.2003 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5352640 A, Combes
- US 5545596 A, Alvarez Casariego,
- US 7393802 B2, Seto
- US 7622410 B, Longobardo
- US 8017538 B2, Teyssedre
- US 8551899 B, Kim
- US 7754632 B, Delmotte
- US 8785338 B, Tsuzuki
- US 9120695 B, Lee
- US 9617182 B, Cho
- US 7902097 B2, Cid-Aguilar

### Non-patent literature cited in the description

- **K. M. FYLES.** Modern Automotive Glasses. *Glass Technology,* February 1996, vol. 37, 2-6
- **GORDON F. BRESTERM et al.** The color of ironcontaining glasses of varying composition. *Journal of the Society of Glass Technology,* 1950, 332-406
- **N. E. DENSEM.** The equilibrium between ferrous and ferric oxides in glasses. *Journal of the Society of Glass Technology,* May 1937, 374-389
- **J. C. HOSTETTER ; H. S. ROBERTS.** Note on the dissociation of Ferric Oxide dissolved in glass and its relation to the color of ironbearing glasses. *Journal of the American Ceramic Society, USA,* September 1921, 927-938
- Color Generation and Control in Glass. **C.R. BAMFORD.** Glass Science and Technology. Elsevier Science Publishing Co, 1977
- **BEALS MD.** Effects of titanium dioxide on glass. *The Glass Industry,* September 1963, 495-531
- Egyptian and Persian blue. **WALDEMAR A. WEIL.** Colored Glasses, Society of Glass Technology. 1976, 154-167
- Color Generation and Control in Glass. **C. R. BAMFORD.** Glass Science and Technology. Elsevier Scientific Publishing Company, 1977, 48-50